# FASCICULE DE BREVET EUROPEEN

(11) **EP 3 537 226 B1**
(45) Date de publication et mention de la délivrance du brevet: **04.11.2020**
(21) Numéro de dépôt: 18160213.7
(22) Date de dépôt: 06.03.2018
(51) Int. Cl.: G04B 19/12, G04D 3/02

(54) **PROCÉDÉ DE FABRICATION D'APPLIQUE DIAMANTÉE D'HORLOGERIE**
HERSTELLUNGSVERFAHREN EINER DIAMANTENPOLIERTEN APPLIQUE FÜR UHR
METHOD FOR MANUFACTURING DIAMOND POLISHED MARKS FOR A TIMEPIECE

(43) Date de publication de la demande: 11.09.2019
(73) Titulaire: Nivarox-FAR S.A., 2400 Le Locle (CH)
(72) Inventeur: TROTTA, Carmelo, 2400 Le Locle (CH); HAEFELI, Frédéric, 2720 Tramelan (CH)
(74) Mandataire: ICB SA

(56) Documents cités:
- EP-A1- 1 557 729
- EP-A1- 2 455 824
- CH-A2- 712 210

## Description

### Domaine de l'invention

L'invention concerne un procédé de fabrication d'une applique d'horlogerie, comportant une surface supérieure destinée à être vue par un utilisateur, et une surface inférieure pour son appui sur un cadran ou une structure d'une pièce d'horlogerie, et au moins un pied saillant de ladite surface inférieure, comportant une succession d'étapes selon lesquelles on réalise au préalable un brut sous la forme d'un lopin droit avec une surface inférieure sensiblement plane dont est saillante une excroissance pour la réalisation de chaque dit pied, à l'opposé d'un dessus que comporte ledit brut, puis on réalise une ébauche avec au moins l'usinage de chaque dit pied, puis on monte ladite ébauche sur au moins un outillage comportant au moins une surface d'appui complémentaire à la surface inférieure de ladite ébauche, ledit outillage comportant encore au moins un évidement pour le logement de chaque dit pied, ledit outillage comportant encore des moyens de serrage et/ou un adhésif pour la fixation de chaque dite ébauche, puis on réusine la partie supérieure de ladite ébauche avec au moins une opération finale de diamantage pour réaliser ladite surface supérieure.

### Arrière-pian de l'invention

Les appliques d'horlogerie sont des éléments essentiels d'une pièce d'horlogerie, en particulier d'une montre, en contribuant à lui donner une physionomie particulière. De ce fait, leur exécution doit être particulièrement soignée, très reproductible, et dépourvue de tout défaut d'état de surface. Une exécution parfaite est rendue difficile par la très petite taille de ces composants d'aspect, et par leur préhension difficile. De ce fait le taux de rebut peut être élevé. Cette fabrication est encore plus délicate quand les appliques sont de forme gauche, pour s'adapter à la courbure d'un cadran, d'un rehaut, ou d'une platine, et sont dépourvues de surface de référence plane. Dans le cas de cadrans galbés, il est connu de réaliser des index par décalque, ou encore de réaliser des appliques très fines, directement galbées sur le cadran. On comprend que, dans les deux cas, l'aspect est médiocre. Si on réalise une applique diamantée et qu'on la galbe ou qu'on la plie (pour une applique coudée) après diamantage, on altère fortement son aspect, avec l'apparition d'une surface en peau d'orange et/ou de criques, ce qui n'est pas admissible.

Le document EP1557729A1 au nom de NIVAROX décrit un procédé de fabrication d'index horaires avec pieds, permettant la fixation de la base desdits index sur un cadran, à partir d'un profilé métallique, comportant les étapes consistant à, dans une première étape, fraiser les pieds dans une extrémité du profilé et ébaucher le profil, dans une deuxième étape saisir les pieds dans une pince et tronçonner une ébauche, et dans une troisième étape, terminer l'ébauche à la forme désirée pour l'index et effectuer le diamantage de toutes les surfaces visibles.

### Résumé de l'invention

L'invention se propose de définir un procédé de fabrication d'appliques assurant un état de surface parfait des parties visibles.

A cet effet, i'inveniion un procédé de fabrication d'une applique, selon la revendication 1.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, et en perspective, une applique réalisable par le procédé selon l'invention, qui est une applique galbée, comportant deux pieds sous sa face inférieure, et des facettes sur sa face supérieure;
- la figure 2 représente, de façon schématisée, et en vue de côté, un brut servant de matière première à l'invention, qui est un lopin sensiblement droit et qui comporte au-dessous une surface inférieure sensiblement plane, dont est saillante une excroissance pour la réalisation de chaque pied, à l'opposé d'un dessus que comporte ce brut ;
- la figure 3 représente, de façon similaire à la figure 2, une ébauche réalisée par déformation de ce brut ;
- la figure 4 représente, de façon similaire à la figure 4, la même ébauche transformée par redressage des excroissances inférieures pour former des pieds parallèles ;
- la figure 5 représente, de façon similaire à la figure 2, une autre variante de brut, comportant des excroissances inférieures divergentes ;
- la figure 6 représente, de façon similaire à la figure 3, une ébauche réalisée par déformation du brut de la figure 5, dont les pieds sont parallèles du seul fait de la déformation du brut ;
- la figure 7 représente, de façon similaire à la figure 2, une autre variante encore de brut, comportant des excroissances inférieures prévues pour être réusinées ;
- la figure 8 représente, de façon similaire à la figure 3, une ébauche réalisée par déformation du brut de la figure 7 ;
- la figure 9 représente, de façon similaire à la figure 4, l'ébauche de la figure 8 transformée par réusinage de ses excroissances inférieures pour former des pieds parallèles ;
- la figure 10 représente, de façon schématisée, et en vue de côté, un outillage conçu pour porter plusieurs telles ébauches, dont une seule est représentée montée en position, pour les transformer en appliques directement utilisables après usinage et diamantage de la surface supérieure terminée ;
- la figure 11 est une section en coupe de l'outillage de la figure 10 portant une telle ébauche ;

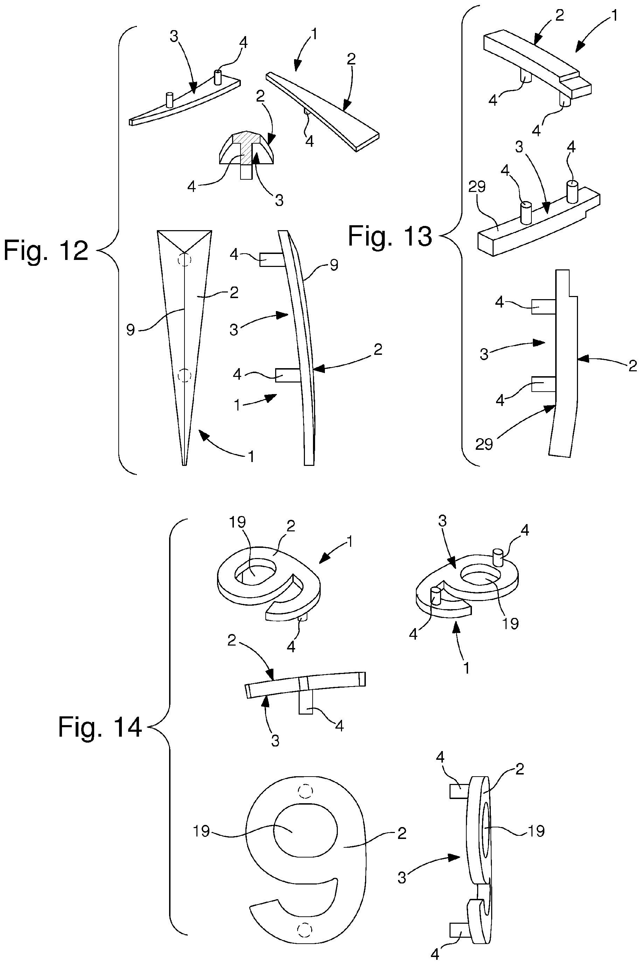

- la figure 12 rassemble deux vues en perspective vues du dessus et du dessous, une vue de dessus et une vue de côté, ainsi qu'une section transversale intermédiaire, d'une applique galbée réalisée selon l'invention, dont la surface inférieure est rayonnée, ainsi que l'arête de jonction de deux grandes facettes supérieures symétriques par rapport à un plan passant par cette arête, et qui comporte encore une facette supérieure frontale ;
- la figure 13 rassemble deux vues en perspective vues du dessus et du dessous, et une vue de côté, d'une applique coudée réalisée selon l'invention, comportant des facettes planes ;
- la figure 14 rassemble deux vues en perspective vues du dessus et du dessous, une vue de dessus et deux vues de côté selon des directions perpendiculaires d'une applique formant un chiffre, réalisée selon l'invention.

### Description détaillée des modes de réalisation préférés

L'invention concerne un procédé de fabrication d'une applique 1 d'horlogerie.

Par « applique » on entend tout élément d'affichage ou de décoration, destiné à être vu par un utilisateur, tel que signe, index, chiffre, logo, monogramme, ou similaire, posé sur un objet, notamment un cadran, un réhaut, une platine, un pont, ou similaire.

Une telle applique 1 comporte usuellement une surface supérieure 2 destinée à être vue par un utilisateur, et une surface inférieure 3 pour son appui sur un cadran ou une structure d'une pièce d'horlogerie.

Si cette surface inférieure 3 peut être directement collée sur un tel cadran ou une telle structure, elle comporte généralement au moins un pied 4. Chaque pied 4 est saillant de cette surface inférieure 3, et plus particulièrement mais non limitativement selon une orientation particulière dans l'espace par rapport à la surface inférieure 3, pour sa fixation sur un tel cadran ou une telle structure.

Pour la fabrication d'une telle applique 1, on réalise successivement les étapes suivantes :
- on réalise au préalable un brut 10 sous la forme d'un lopin droit avec une surface inférieure 30 sensiblement plane, dont est saillante une excroissance 40 pour la réalisation de chaque pied 4, à l'opposé d'un dessus 20 que comporte ce brut 10 ;
- puis on réalise une ébauche 11, avec au moins l'usinage de chaque pied 4 ;
- puis on monte cette ébauche 11 sur au moins un outillage 50 comportant au moins une surface d'appui 51 complémentaire à la surface inférieure de l'ébauche 11, cet outillage 50 comportant encore au moins un évidement 54 pour le logement de chaque pied 4, et notamment mais non limitativement selon son orientation particulière; cet outillage 50 comporte encore des moyens de serrage et/ou un adhésif pour la fixation de chaque ébauche 11 ;
- puis on réusine la partie supérieure de l'ébauche 11, avec au moins une opération finale de diamantage pour réaliser la surface supérieure 2.

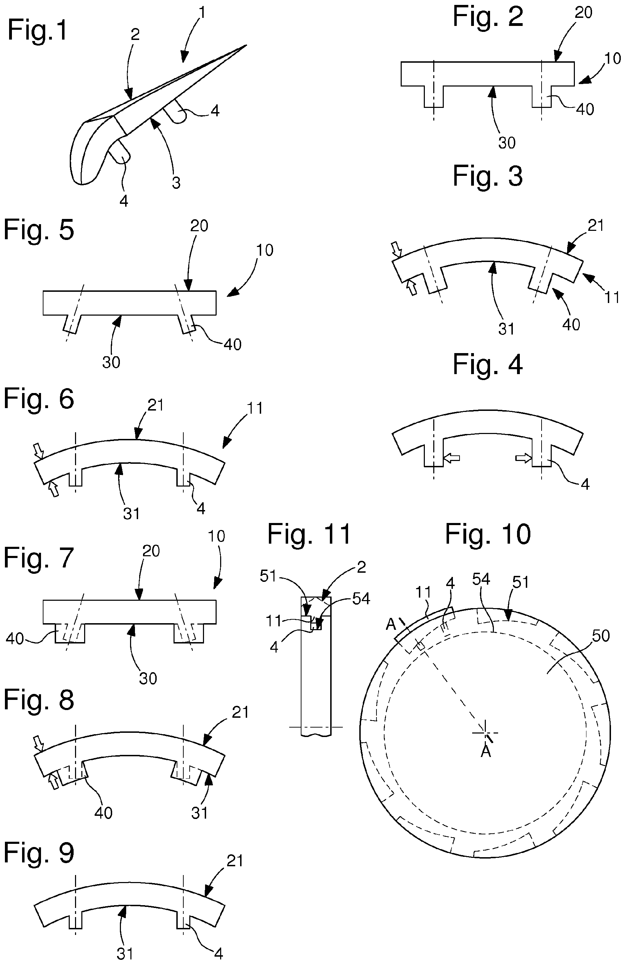

S'il est bien sûr possible de réaliser une excroissance 40 unique pour la réalisation de plusieurs pieds 4, les figures illustrent un mode de réalisation préféré où l'excroissance 40 correspond à un pied 4 unique, cette conception permettant de réaliser facilement la réalisation de l'ébauche par déformation, tel qu'illustré aux figures 3, 6, et 8.

Le réusinage de l'ébauche 11 après la confection des pieds 4 peut être décomposé en plusieurs opérations, réalisées, ou bien sur un outillage 50 polyvalent et unique, ou bien sur une pluralité d'outillages 50, chacun spécifique à une opération d'usinage d'une surface particulière.

De la même façon, l'usinage de finition par diamantage de la partie supérieure de l'ébauche 11 par diamantage pour réaliser la surface supérieure 2 terminée, peut être, selon le cas, réalisé sur un outillage 50 unique, ou bien sur une pluralité d'outillages 50, chacun spécifique à une opération d'usinage d'une surface particulière.

Plus particulièrement, selon une caractéristique particulière de l'invention, lors de la réalisation de l'ébauche 11, ou après la formation de l'ébauche 11, on réalise au moins un pied 4 par usinage et/ou redressage de l'excroissance 40 dont est issu ce pied 4. Plus particulièrement encore, lors de la réalisation de l'ébauche 11 ou après la formation de l'ébauche 11, on réalise chaque pied 4 par usinage et/ou redressage de chaque excroissance 40. Plus particulièrement encore, on réalise tous les pieds 4 avant le montage de l'ébauche 11 sur l'outillage 50 dont chaque évidement 54 est agencé pour la réception d'au moins un pied 4, ou est de profil complémentaire à au moins un pied 4. On comprend que le même évidement 54 peut servir au logement de plusieurs pieds 4 d'une même ébauche 11, voire de tous les pieds 4 d'une même ébauche 11, ou bien qu'au moins un évidement 54 peut être réservé au logement d'un pied 4 particulier. Naturellement chaque évidement 54 est agencé pour autoriser l'insertion de chaque pied, et peut comporter un oblong ou similaire pour l'insertion d'un pied 4 incliné par rapport à un autre pied 4 de la même ébauche 11. Le cas d'un évidement 54 de profil strictement complémentaire à un pied 4 est donc un cas particulier. La réalisation d'un évidement 54 sous forme d'une gorge oblongue délimitée par au moins une surface de butée permet généralement à la fois un bon positionnement et un bon maintien de l'ébauche.

Selon l'invention, après la réalisation du brut 10, on déforme ce brut 10 pour réaliser l'ébauche 11, de façon à former un galbe supérieur 21 résultant de la déformation du dessus 20 du brut 10. Et, sur au moins un outillage 50, on réusine ce galbe supérieur 21 avec au moins une opération finale de diamantage pour réaliser la surface supérieure 2 terminée.

Naturellement la surface supérieure 2 peut être complexe, et comporter plusieurs surfaces élémentaires 6, telles que des facettes planes, des surfaces gauches, notamment en portion de tore, de calotte sphérique, ou autre, et on comprend que, selon la géométrie de cette surface supérieure 2 et des surfaces élémentaires qu'elle comporte, il peut être nécessaire de mettre en oeuvre :
- un moyen d'usinage multi-axes, par exemple un centre d'usinage ou une rectifieuse à 5 ou 6 axes, comportant au moins un outil de diamantage,
- et/ou une pluralité d'outillages 50 chacun adapté à la présentation adéquate dans l'espace de surfaces particulières pour leur usinage par les moyens d'usinage utilisés.

L'usinage peut mettre en œuvre différentes technologies, combinées ou non, et non limitativement : fraisage, rectification, électro-érosion, laser, ou autre.

Selon une caractéristique particulière de l'invention, on réalise l'usinage et/ou le diamantage de la surface supérieure 2 avec une unité d'usinage et/ou de diamantage mobile selon au moins 5 axes par rapport à chaque ébauche 11.

Plus particulièrement, pour la réalisation d'une surface supérieure 2 à symétrie plane de part et d'autre d'une arête principale 9 définissant un plan de symétrie P, selon une caractéristique particulière de l'invention, on réalise au moins un outillage 50 dont chaque surface d'appui 51 est disposée de façon à ce que ce pian de symétrie P soit perpendiculaire à un axe de rotation D autour duquel cet outillage 50 est mobile en rotation.

Notamment, et tel qu'illustré par les figures 10 et 11, cet outillage 50 est un tasseau agencé pour être entraîné en rotation en regard d'un ou plusieurs moyens d'usinage, et apte à recevoir une pluralité d'ébauches 11, chacune insérée dans un logement particulier, ou toutes insérées dans une gorge périphérique 54 agencée pour le logement des pieds 4. La figure 10 montre un cas particulier avec des logements de forme, agencés pour donner une orientation angulaire particulière à chaque ébauche 11. On peut aussi, très simplement, réaliser ce tasseau avec une gorge périphérique sans appui inférieur des pieds 4 et/ou de la face inférieure de l'ébauche 11.

Plus particulièrement, on réalise au moins un tel outillage 50 avec chaque surface d'appui 51 disposée de façon à ce qu'au moins une partie de ladite surface supérieure 2 soit concentrique à un axe de rotation D autour duquel cet outillage 50 est mobile en rotation.

L'outil de diamantage peut être piloté selon une trajectoire multi-axes, ou encore suivre une came pour réaliser un mouvement non circulaire.

De façon particulière, pour la réalisation d'une surface supérieure 2 résultant de la juxtaposition de surfaces élémentaires 6 dont au moins l'une est une surface élémentaire à symétrie de révolution 7, on réalise un outillage 50 pour la réalisation de chaque surface élémentaire à symétrie de révolution 7, où chaque dite surface d'appui 51 est disposée de façon à ce que cette surface élémentaire à symétrie de révolution 7 soit concentrique à un axe de rotation D autour duquel cet outillage 50 est mobile en rotation.

Plus particulièrement, pour la réalisation d'une surface supérieure 2 à symétrie de révolution, on réalise un outillage 50 unique, avec chaque surface d'appui 51 disposée de façon à ce que la totalité de la surface supérieure 2 soit concentrique à un axe de rotation D autour duquel cet outillage 50 est mobile en rotation.

Dans le cas particulier de la réalisation d'une surface supérieure 2 résultant de la juxtaposition de surfaces élémentaires 6 dont au moins l'une est une surface élémentaire plane 8, on réalise avantageusement au moins un outillage 50 pour la réalisation d'une surface élémentaire plane 8, où chaque surface d'appui 51 est disposée de façon à ce que la surface élémentaire plane 8 soit parallèle à un axe de rotation D autour duquel cet outillage 50 est mobile en rotation.

De façon avantageuse, quand la géométrie de la surface supérieure et les moyens d'usinage choisis le permettent, on effectue la totalité de l'usinage du galbe supérieur 21 pour réaliser la dite surface supérieure 2 sans démonter l'ébauche 11 d'un outillage 50 unique.

Si nécessaire, on décompose l'usinage du galbe supérieur 21 pour réaliser la surface supérieure 2 en utilisant une pluralité d'outillages 50 sur lesquels on monte successivement chaque ébauche 11.

Selon une caractéristique particulière de l'invention, on réalise au moins un outillage 50 comportant des moyens d'indexage angulaire pour le positionnement de chaque ébauche 11 par rapport à l'outillage 50, et pour le positionnement dans l'espace des moyens d'usinage et/ou de diamantage par rapport à chaque ébauche 11 montée sur cet outillage 50.

Pour la réalisation d'appliques 1 de forme particulière, telles que chiffres, ou logos, ou similaires, on réalise le brut 10 en forme de chiffre ou de symbole comportant un cordon s'étendant autour d'au moins une ouverture 19 que comporte ce chiffre ou symbole, ce cordon comportant la surface inférieure 30 qui porte une excroissance 40 pour la réalisation de chaque pied 4.

Dans le cas particulier d'appliques 1 creuses, on réalise le brut 10 creux, avec la surface inférieure 30 sensiblement plane limitée à un contour périphérique d'appui, qui porte une excroissance 40 pour la réalisation de chaque pied 4, et/ou qui entoure une poche dont est saillante une telle excroissance 40 pour la réalisation d'au moins un pied 4.

Dans le cas d'appliques 1 pleines, on réalise le brut 10 plein, avec la surface inférieure 30 sensiblement plane dépourvue de poche, et qui porte une excroissance 40 pour la réalisation de chaque pied 4.

Une mise en œuvre particulière du procédé selon l'invention concerne les appliques galbées, ou encore coudées, dont la surface inférieure 3 est gauche, pour leur appui sur un cadran ou une structure d'une pièce d'horlogerie. Dans ce cas particulier, on réalise une applique 1 comportant une surface inférieure galbée 3 et/ou coudée, et on réalise successivement les étapes suivantes :
- on réalise au préalable un brut 10 sous la forme d'un lopin droit avec une surface inférieure 30 sensiblement plane dont est saiiiante une excroissance 40 pour ia réalisation de chaque pied 4, à l'opposé d'un dessus 20 que comporte le brut 10 ;
- puis on déforme le brut 10 pour réaliser une ébauche 11 comportant un galbe inférieur 31 lequel comporte au moins une partie de la surface inférieure galbée 3, ladite ébauche 11 comportant un galbe supérieur 21 résultant de la déformation du dessus 20,
- puis on monte l'ébauche 11 sur au moins un outillage 50 comportant au moins une surface d'appui 51 complémentaire à au moins une partie de ladite surface inférieure galbée 3 ou au galbe inférieur 31, cet outillage 50 comportant encore au moins un évidement 54 pour le logement de chaque excroissance 40 ou de chaque pied 4 quand l'excroissance 40 est identique au pied 4, et notamment mais non limitativement selon son orientation particulière, cet outillage 50 comportant encore des moyens de serrage et/ou un adhésif pour la fixation de chaque ébauche 11,
- puis on usine le galbe supérieur 21 avec au moins une opération finale de diamantage pour réaliser la surface supérieure 2.

Plus particulièrement, on réalise le galbe inférieur 31 constituant la totalité de la surface inférieure galbée 3.

De façon particulière, on réalise ledit brut 10 en matériau précieux, ou matériau titrable, notamment or ou alliage d'or, ou platine, ou alliage de platine, ou similaire.

## Revendications

1. Procédé de fabrication d'une applique (1) d'horlogerie, comportant une surface supérieure (2) destinée à être vue par un utilisateur, et une surface inférieure (3) pour son appui sur un cadran ou une structure d'une pièce d'horlogerie, et au moins un pied (4) saillant de ladite surface inférieure (3), comportant une succession d'étapes selon lesquelles on réalise au préalable un brut (10) sous la forme d'un lopin droit avec une surface inférieure (30) sensiblement plane dont est saillante une excroissance (40) pour la réalisation de chaque dit pied (4), à l'opposé d'un dessus (20) que comporte ledit brut (10), puis on réalise une ébauche (11) avec au moins l'usinage de chaque dit pied (4), puis on monte ladite ébauche (11) sur au moins un outillage (50) comportant au moins une surface d'appui (51) complémentaire à la surface inférieure de ladite ébauche (11), ledit outillage (50) comportant encore au moins un évidement (54) pour le logement de chaque dit pied (4), ledit outillage (50) comportant encore des moyens de serrage et/ou un adhésif pour la fixation de chaque dite ébauche (11), puis on réusine la partie supérieure de ladite ébauche (11) avec au moins une opération finale de diamantage pour réaliser ladite surface supérieure (2), **caractérisé en ce que**, après la réalisation dudit brut (10), on déforme ledit brut (10) pour réaliser ladite ébauche (11) de façon à former un galbe supérieur (21) résultant de la déformation dudit dessus (20), et **en ce que**, sur ledit outillage (50), on réusine ledit galbe supérieur (21) avec au moins une opération finale de diamantage pour réaliser ladite surface supérieure (2).

2. Procédé de fabrication d'une applique (1) d'horlogerie selon la revendication 1, **caractérisé en ce que**, lors de la réalisation de ladite ébauche (11) ou après la formation de ladite ébauche (11), on réalise au moins un dit pied (4) par usinage et/ou redressage de la dite excroissance (40) dont est issu ledit pied (4).

3. Procédé de fabrication d'une applique (1) d'horlogerie selon la revendication 2, **caractérisé en ce que**, lors de la réalisation de ladite ébauche (11) ou après la formation de ladite ébauche (11), on réalise chaque dit pied (4) par usinage et/ou redressage de chaque dite excroissance (40).

4. Procédé de fabrication d'une applique (1) d'horlogerie selon la revendication 2 ou 3, **caractérisé en ce qu'**on réalise tous les dits pieds (4) avant le montage de ladite ébauche (11) sur ledit outillage (50) dont chaque dit évidement (54) est agencé pour la réception d'au moins un dit pied (4) ou est de profil complémentaire à au moins un dit pied (4).

5. Procédé de fabrication d'une applique (1) d'horlogerie l'une des revendications 1 à 4, pour la réalisation d'une dite surface supérieure (2) à symétrie plane de part et d'autre d'une arête principale (9) définissant un plan de symétrie (P), **caractérisé en ce qu'**on réalise au moins un dit outillage (50) dont chaque dite surface d'appui (51) est disposée de façon à ce que ledit plan de symétrie (P) soit perpendiculaire à un axe de rotation (D) autour duquel ce dit outillage (50) est mobile en rotation.

6. Procédé de fabrication d'une applique (1) d'horlogerie selon l'une des revendications 1 à 5, **caractérisé en ce qu'**on réalise au moins un dit outillage (50) avec chaque dite surface d'appui (51) disposée de façon à ce qu'au moins une partie de ladite surface supérieure (2) soit concentrique à un axe de rotation (D) autour duquel ce dit outillage (50) est mobile en rotation.

7. Procédé de fabrication d'une applique (1) d'horlogerie selon la revendication 6, pour la réalisation d'une dite surface supérieure (2) résultant de la juxtaposition de surfaces élémentaires (6) dont au moins l'une est une surface élémentaire à symétrie de révolution (7), **caractérisé en ce qu'**on réalise un dit outillage (50) pour la réalisation de chaque surface élémentaire à symétrie de révolution (7), où chaque dite surface d'appui (51) est disposée de façon à ce que ladite surface élémentaire à symétrie de révolution (7) soit concentrique à un axe de rotation (D) autour duquel ce dit outillage (50) est mobile en rotation.

8. Procédé de fabrication d'une applique (1) d'horlogerie selon la revendication 6, pour la réalisation d'une dite surface supérieure (2) à symétrie de révolution, **caractérisé en ce qu'**on réalise un dit outillage (50) unique avec chaque dite surface d'appui (51) disposée de façon à ce que la totalité de ladite surface supérieure (2) soit concentrique à un axe de rotation (D) autour duquel ce dit outillage (50) est mobile en rotation.

9. Procédé de fabrication d'une applique (1) d'horlogerie l'une des revendications 1 à 5, pour la réalisation d'une dite surface supérieure (2) résultant de la juxtaposition de surfaces élémentaires (6) dont au moins l'une est une surface élémentaire plane (8), **caractérisé en ce qu'**on réalise au moins un dit outillage (50) pour la réalisation d'une surface élémentaire plane (8), où chaque dite surface d'appui (51) est disposée de façon à ce que ladite surface élémentaire plane (8) soit parallèle à un axe de rotation (D) autour duquel ce dit outillage (50) est mobile en rotation.

10. Procédé de fabrication d'une applique (1) d'horlogerie selon l'une des revendications 1 à 5, **caractérisé en ce qu'**on effectue la totalité de l'usinage dudit galbe supérieur (21) pour réaliser la dite surface supérieure (2) sans démonter ladite ébauche (11) d'un outillage (50) unique.

11. Procédé de fabrication d'une applique (1) d'horlogerie selon l'une des revendications 1 à 5, **caractérisé en ce qu'**on décompose l'usinage dudit galbe supérieur (21) pour réaliser la dite surface supérieure (2) en utilisant une pluralité de dits outillages (50) sur lesquels on monte successivement ladite ébauche (11).

12. Procédé de fabrication d'une applique (1) d'horlogerie selon l'une des revendications 1 à 11, **caractérisé en ce qu'**on réalise au moins un dit outillage (50) comportant des moyens d'indexage angulaire pour le positionnement de chaque dite ébauche (11) par rapport audit outillage (50), et pour le positionnement dans l'espace des moyens d'usinage et/ou de diamantage par rapport à chaque dite ébauche (11) montée sur ledit outillage (50).

13. Procédé de fabrication d'une applique (1) d'horlogerie selon l'une des revendications 1 à 12, **caractérisé en ce qu'**on réalise ledit usinage et/ou ledit diamantage de ladite surface supérieure (2) avec une unité d'usinage et/ou de diamantage mobile selon 5 axes par rapport à chaque dite ébauche (11).

14. Procédé de fabrication d'une applique (1) d'horlogerie selon l'une des revendications 1 à 13, **caractérisé en ce qu'**on réalise ledit brut (10) en forme de chiffre ou de symbole comportant un cordon s'étendant autour d'au moins une ouverture que comporte ledit chiffre ou symbole, ledit cordon comportant ladite surface inférieure (30) qui porte une dite excroissance (40) pour la réalisation de chaque dit pied (4).

15. Procédé de fabrication d'une applique (1) d'horlogerie selon l'une des revendications 1 à 14, **caractérisé en ce qu'**on réalise ledit brut (10) creux, avec ladite surface inférieure (30) sensiblement plane limitée à un contour périphérique d'appui, qui porte une dite excroissance (40) pour la réalisation de chaque dit pied (4), et/ou qui entoure une poche dont est saillante une dite excroissance (40) pour la réalisation d'au moins un dit pied (4).

16. Procédé de fabrication d'une applique (1) d'horlogerie selon l'une des revendications 1 à 14, **caractérisé en ce qu'**on réalise ledit brut (10) plein, avec ladite surface inférieure (30) sensiblement plane dépourvue de poche, et qui porte une dite excroissance (40) pour la réalisation de chaque dit pied (4).

17. Procédé de fabrication d'une applique (1) d'horlogerie, selon l'une des revendications 1 à 16, **caractérisé en ce qu'**on réalise une dite applique (1) comportant une surface inférieure galbée (3) et/ou coudée pour son appui sur un cadran ou une structure d'une pièce d'horlogerie, et **en ce qu'**on réalise successivement les étapes suivantes, selon lesquelles on réalise au préalable un brut (10) sous la forme d'un lopin droit avec une surface inférieure (30) sensiblement plane dont est saillante une excroissance (40) pour la réalisation de chaque dit pied (4), à l'opposé d'un dessus (20) que comporte ledit brut (10), puis on déforme ledit brut (10) pour réaliser une ébauche (11) comportant un galbe inférieur (31) lequel comporte au moins une partie de ladite surface inférieure galbée (3), ladite ébauche (11) comportant un galbe supérieur (21) résultant de la déformation dudit dessus (20), puis on monte ladite ébauche (11) sur au moins un outillage (50) comportant au moins une surface d'appui (51) complémentaire à ladite au moins une partie de ladite surface inférieure galbée (3) ou audit galbe inférieur (31), ledit outillage (50) comportant encore au moins un évidement (54) pour le logement de chaque dite excroissance (40) ou de chaque dit pied (4) quand ladite excroissance (40) est identique audit pied (4), ledit outillage (50) comportant encore des moyens de serrage et/ou un adhésif pour la fixation de chaque dite ébauche (11), puis on usine ledit galbe supérieur (21) avec au moins une opération finale de diamantage pour réaliser ladite surface supérieure (2).

18. Procédé de fabrication d'une applique (1) d'horlogerie selon la revendication 17, **caractérisé en ce qu'**on réalise ledit galbe inférieur (31) constituant la totalité de ladite surface inférieure galbée (3).

19. Procédé de fabrication d'une applique (1) d'horlogerie selon l'une des revendications 1 à 18, **caractérisé en ce qu'**on réalise ledit brut (10) en matériau titrable.

## Patentansprüche

1. Fabrikationsverfahren einer Uhrenapplike (1), aufweisend eine obere Fläche (2), die bestimmt ist, von einem Benutzer betrachtet zu werden, und eine untere Fläche (3) für deren Abstützung auf einem Zifferblatt oder einer Struktur einer Uhr, und mindestens einen aus der unteren Fläche (3) hervorstehenden Fuß (4), aufweisend eine Abfolge von Schritten, gemäß denen zunächst ein Rohteil (10) in Form eines unbearbeitetes Werkstückes mit einer etwa ebenen unteren Fläche (30) hergestellt wird, aus der ein Vorsprung (40) für die Herstellung des Fußes (4) hervorsteht, gegenüber einer Oberseite (20), die das Rohteil (10) aufweist, dann ein Rohling (11) mit mindestens der Bearbeitung jedes Fußes (4) hergestellt wird, dann der Rohling (11) auf mindestens einem Werkzeug (50) angebracht wird, das mindestens eine zu der unteren Fläche des Rohlings (11) komplementäre Stützfläche (51) aufweist, wobei das Werkzeug (50) weiterhin mindestens eine Aussparung (54) für die Aufnahme jedes Fußes (4) aufweist, wobei das Werkzeug (50) weiterhin Spannmittel und/oder einen Haftstoff für die Befestigung jedes Rohlings (11) aufweist, dann der obere Teil des Rohlings (11) mit mindestens einem abschließenden Diamantierungsvorgang erneut bearbeitet wird, um die obere Fläche (2) herzustellen, **dadurch gekennzeichnet, dass** nach der Herstellung des Rohteils (10) das Rohteil (10) verformt wird, um den Rohling (11) herzustellen, derart, dass eine obere Wölbung (21) gebildet wird, die aus der Verformung der Oberseite (20) resultiert, und dass die obere Wölbung (21) auf dem Werkzeug (50) mit mindestens einem abschließenden Diamantierungsvorgang erneut bearbeitet wird, um die obere Fläche (2) herzustellen.

2. Fabrikationsverfahren einer Uhrenapplike (1) nach Anspruch 1, **dadurch gekennzeichnet, dass** bei der Herstellung des Rohlings (11) oder nach der Bildung des Rohlings (11) mindestens ein Fuß (4) durch Bearbeiten und/oder Geradebiegen des Vorsprungs (40) hergestellt wird, aus dem der Fuß (4) hervorgeht.

3. Fabrikationsverfahren einer Uhrenapplike (1) nach Anspruch 2, **dadurch gekennzeichnet, dass** bei der Herstellung des Rohlings (11) oder nach der Bildung des Rohlings (11) jeder Fuß (4) durch Bearbeiten und/oder Geradebiegen jedes Vorsprungs (40) hergestellt wird.

4. Fabrikationsverfahren einer Uhrenapplike (1) nach Anspruch 2 oder 3, **dadurch gekennzeichnet, dass** alle Füße (4) vor der Montage des Rohlings (11) auf dem Werkzeug (50) hergestellt werden, von dem jede Aussparung (54) für die Aufnahme von mindestens einem Fuß (4) eingerichtet ist oder von komplementärem Profil zu mindestens einem Fuß (4) ist.

5. Fabrikationsverfahren einer Uhrenapplike (1) nach einem der Ansprüche 1 bis 4 für die Herstellung einer oberen Fläche (2) mit ebener Symmetrie zu beiden Seiten einer Hauptkante (9), die eine Symmetrieebene (P) festlegt, **dadurch gekennzeichnet, dass** mindestens ein Werkzeug (50) hergestellt wird, von dem jede Stützfläche (51) derart angeordnet ist, dass die Symmetrieebene (P) senkrecht zu einer Rotationsachse (D) ist, um die dieses Werkzeug (50) rotatorisch beweglich ist.

6. Fabrikationsverfahren einer Uhrenapplike (1) nach einem der Ansprüche 1 bis 5, **dadurch gekennzeichnet, dass** mindestens ein Werkzeug (50) mit jeder Stützfläche (51) hergestellt wird, die derart angeordnet ist, dass mindestens ein Teil der oberen Fläche (2) zu einer Rotationsachse (D), um die dieses Werkzeug (50) rotatorisch beweglich ist, konzentrisch ist.

7. Fabrikationsverfahren einer Uhrenapplike (1) nach Anspruch 6 für die Herstellung einer oberen Fläche (2) im Ergebnis der Nebeneinanderstellung von elementaren Flächen (6), von denen mindestens die eine eine elementare Fläche mit Drehsymmetrie (7) ist, **dadurch gekennzeichnet, dass** ein Werkzeug (50) für die Herstellung jeder elementaren Fläche mit Drehsymmetrie (7) hergestellt wird, wo jede Stützfläche (51) derart angeordnet ist, dass die elementare Fläche mit Drehsymmetrie (7) zu einer Rotationsachse (D), um die dieses Werkzeug (50) rotatorisch beweglich ist, konzentrisch ist.

8. Fabrikationsverfahren einer Uhrenapplike (1) nach Anspruch 6 für die Herstellung einer oberen Fläche (2) mit Drehsymmetrie, **dadurch gekennzeichnet, dass** ein einziges Werkzeug (50) mit jeder Stützfläche (51) hergestellt wird, die derart angeordnet ist, dass die Gesamtheit der oberen Fläche (2) zu einer Rotationsachse (D), um die dieses Werkzeug (50) rotatorisch beweglich ist, konzentrisch ist.

9. Fabrikationsverfahren einer Uhrenapplike (1) nach einem der Ansprüche 1 bis 5 für die Herstellung einer oberen Fläche (2) im Ergebnis der Nebeneinanderstellung von elementaren Flächen (6), von denen mindestens die eine eine ebene elementare Fläche (8) ist, **dadurch gekennzeichnet, dass** mindestens ein Werkzeug (50) für die Herstellung einer ebenen elementaren Fläche (8) hergestellt wird, wo jede Stützfläche (51) derart angeordnet ist, dass die ebene elementare Fläche (8) zu einer Rotationsachse (D), um die dieses Werkzeug (50) rotatorisch beweglich ist, parallel ist.

10. Fabrikationsverfahren einer Uhrenapplike (1) nach einem der Ansprüche 1 bis 5, **dadurch gekennzeichnet, dass** die Gesamtheit der Bearbeitung der oberen Wölbung (21) durchgeführt wird, um die obere Fläche (2) herzustellen, ohne den Rohling (11) von einem einzigen Werkzeug (50) zu demontieren.

11. Fabrikationsverfahren einer Uhrenapplike (1) nach einem der Ansprüche 1 bis 5, **dadurch gekennzeichnet, dass** die Bearbeitung der oberen Wölbung (21), um die obere Fläche (2) herzustellen, unterteilt wird, durch Verwenden einer Vielzahl von Werkzeugen (50), auf denen aufeinanderfolgend der Rohling (11) angebracht wird.

12. Fabrikationsverfahren einer Uhrenapplike (1) nach einem der Ansprüche 1 bis 11, **dadurch gekennzeichnet, dass** mindestens ein Werkzeug (50) herstellt wird, das Winkelindexiermittel für die Positionierung jedes Rohlings (11) in Bezug auf das Werkzeug (50) aufweist, und für die Positionierung im Raum der Bearbeitungs- und/oder Diamantierungsmittel in Bezug auf jeden Rohling (11), der auf dem Werkzeug (50) angebracht ist.

13. Fabrikationsverfahren einer Uhrenapplike (1) nach einem der Ansprüche 1 bis 12, **dadurch gekennzeichnet, dass** die Bearbeitung und/oder die Diamantierung der oberen Fläche (2) mit einer in 5 Achsen in Bezug auf jeden Rohling (11) beweglichen Bearbeitungs- und/oder Diamantierungseinheit durchgeführt wird.

14. Fabrikationsverfahren einer Uhrenapplike (1) nach einem der Ansprüche 1 bis 13, **dadurch gekennzeichnet, dass** das Rohteil (10) in Ziffer- oder Symbolform hergestellt wird, aufweisend einen Strang, der sich um mindestens eine Öffnung erstreckt, die die Ziffer oder das Symbol aufweist, wobei der Strang die untere Fläche (30) aufweist, die einen Vorsprung (40) für die Herstellung jedes Fußes (4) trägt.

15. Fabrikationsverfahren einer Uhrenapplike (1) nach einem der Ansprüche 1 bis 14, **dadurch gekennzeichnet, dass** das Rohteil (10) mit der etwa ebenen, an einer peripheren Stützkontur begrenzten unteren Fläche (30) hohl hergestellt wird, die einen Vorsprung (40) für die Herstellung jedes Fußes (4) trägt, und/oder die eine Tasche umgibt, aus der ein Vorsprung (40) für die Herstellung von mindestens einem Fuß (4) hervorsteht.

16. Fabrikationsverfahren einer Uhrenapplike (1) nach einem der Ansprüche 1 bis 14, **dadurch gekennzeichnet, dass** das Rohteil (10) mit der etwa ebenen unteren Fläche (30) ohne Tasche voll hergestellt wird, und die einen Vorsprung (40) für die Herstellung jedes Fußes (4) trägt.

17. Fabrikationsverfahren einer Uhrenapplike (1) nach einem der Ansprüche 1 bis 16, **dadurch gekennzeichnet, dass** eine Applike (1) hergestellt wird, aufweisend eine gewölbte und/oder gekrümmte untere Fläche (3) für deren Abstützung auf einem Zifferblatt oder einer Struktur einer Uhr, und dass aufeinanderfolgend die folgenden Schritte durchgeführt werden, gemäß denen zunächst ein Rohteil (10) in Form eines geraden unbearbeitetes Werkstückes mit einer etwa ebenen unteren Fläche (30) hergestellt wird, aus der ein Vorsprung (40) für die Herstellung jedes Fußes (4) hervorsteht, gegenüber einer Oberseite (20), die das Rohteil (10) aufweist, dann das Rohteil (10) verformt wird, um einen Rohling (11) herzustellen, der eine untere Wölbung (31) aufweist, die mindestens einen Teil der gewölbten unteren Fläche (3) aufweist, wobei der Rohling (11) im Ergebnis der Verformung der Oberseite (20) eine obere Wölbung (21) aufweist, dann der Rohling (11) auf mindestens einem Werkzeug (50) angebracht wird, das mindestens eine zu dem mindestens einen Teil der gewölbten unteren Fläche (3) oder zur unteren Wölbung (31) komplementäre Stützfläche (51) aufweist, wobei das Werkzeug (50) weiterhin mindestens eine Aussparung (54) für die Aufnahme jedes Vorsprungs (40) oder jedes Fußes (4) aufweist, wenn der Vorsprung (40) mit dem Fuß (4) identisch ist, wobei das Werkzeug (50) weiterhin Spannmittel und/oder einen Haftstoff für die Befestigung jedes Rohlings (11) aufweist, dann die obere Wölbung (21) mit mindestens einem abschließenden Diamantierungsvorgang bearbeitet wird, um die obere Fläche (2) herzustellen.

18. Fabrikationsverfahren einer Uhrenapplike (1) nach Anspruch 17, **dadurch gekennzeichnet, dass** die untere Wölbung (31) hergestellt wird, die die Gesamtheit der gewölbten unteren Fläche (3) darstellt.

19. Fabrikationsverfahren einer Uhrenapplike (1) nach einem der Ansprüche 1 bis 18, **dadurch gekennzeichnet, dass** das Rohteil (10) aus titrierbarem Material hergestellt wird.

## Claims

1. Method for fabricating an applique (1) for horology, including an upper surface (2) intended to be seen by a user, and a lower surface (3) for resting on a dial or a structure of a timepiece, and at least one foot (4) protruding from said lower surface (3), including a succession of steps according to which first a rough piece (10) is made in the form of a straight workpiece with a substantially flat lower surface (30) from which projects a protuberance (40) for forming each said foot (4), on the opposite side from a top (20) that said rough piece (10) includes, then a blank (11) is made with at least the machining of each said foot (4), then said blank (11) is mounted on at least one tool (50) having at least one support surface (51) complementary to the lower surface of said blank (11), said tool (50) further including at least one recess (54) for housing each said foot (4), said tool (50) further including gripping means and/or an adhesive for securing each said blank (11), then the upper portion of said blank (11) is machined again with at least a final diamond machining operation to form said upper surface (2), **characterised in that**, once said rough piece (10) is made, said rough piece (10) is deformed to form said blank (11) so as to form an upper curve (21) resulting from the deformation of said top (20), and **in that**, on said tool (50), said upper curve (21) is re-machined with at least one final diamond- machining operation to form said upper surface (2).

2. Method for fabricating an applique (1) for horology according to claim 1, **characterised in that**, when said blank (11) is made or after said blank (11) is formed, at least one said foot (4) is made by machining and/or straightening said protuberance (40) from which said foot (4) is formed.

3. Method for fabricating an applique (1) for horology according to claim 2, **characterised in that**, when said blank (11) is made or after said blank (11) is formed, each said foot (4) is made by machining and/or straightening each said protuberance (40).

4. Method for fabricating an applique (1) for horology according to claim 2 or 3, **characterised in that** all of said feet (4) are made before said blank (11) is mounted on said tool (50), each said recess (54) of which is arranged to receive at least one said foot (4) or has a complementary shape to at least one said foot (4).

5. Method for fabricating an applique (1) for horology according to any of claims 1 to 4, for forming a said upper surface (2) with planar symmetry on either side of a main edge (9) defining a plane of symmetry (P), **characterised in that** at least one said tool (50) is made with each said support surface (51) disposed such that said plane of symmetry (P) is perpendicular to an axis of rotation (D) about which said tool (50) is rotatable.

6. Method for fabricating an applique (1) for horology according to any of claims 1 to 5, **characterised in that** at least one said tool (50) is made with each said support surface (51) disposed such that at least one portion of said upper surface (2) is concentric to an axis of rotation (D) about which said tool (50) is rotatable.

7. Method for fabricating an applique (1) for horology according to claim 6, for forming a said upper surface (2) resulting from the juxtaposition of basic surfaces (6), at least one of which is a basic surface with symmetry of revolution (7), **characterised in that** a said tool (50) is made for forming each basic surface with symmetry of revolution (7), wherein each said support surface (51) is disposed such that said basic surface with symmetry of revolution (7) is concentric to an axis of rotation (D) about which said tool (50) is rotatable.

8. Method for fabricating an applique (1) for horology according to claim 6, for forming a said upper surface (2) with symmetry of revolution, **characterised in that** a single said tool (50) is made with each said support surface (51) disposed such that the entire said upper surface (2) is concentric to an axis of rotation (D) about which said tool (50) is rotatable.

9. Method for fabricating an applique (1) for horology according to any of claims 1 to 5, for forming a said upper surface (2) resulting from the juxtaposition of basic surfaces (6), at least one of which is a flat basic surface (8), **characterised in that** at least one said tool (50) is made for forming a flat basic surface (8), wherein each said support surface (51) is disposed such that said flat basic surface (8) is parallel to an axis of rotation (D) about which said tool (50) is rotatable.

10. Method for fabricating an applique (1) for horology according to any of claims 1 to 5, **characterised in that** all of the machining of said upper curve (21) is performed to form said upper surface (2) without removing said blank (11) from a single tool (50).

11. Method for fabricating an applique (1) for horology according to any of claims 1 to 5, **characterised in that** the machining of said upper curve (21) is broken down to form said upper surface (2) by using a plurality of said tools (50) on which said blank (11) is successively mounted.

12. Method for fabricating an applique (1) for horology according to any of claims 1 to 11, **characterised in that** at least one said tool (50) is made including angular indexing means for the positioning of each said blank (11) with respect to said tool (50), and for the spatial positioning of the machining and/or diamond machining means with respect to each said blank (11) mounted on said tool (50).

13. Method for fabricating an applique (1) for horology according to any of claims 1 to 12, **characterised in that** said machining and/or said diamond machining of said upper surface (2) is performed with a machining and/or diamond machining unit movable on 5 axes with respect to each said blank (11).

14. Method for fabricating an applique (1) for horology according to any of claims 1 to 13, **characterised in that** said rough piece (10) is made in the form of a numeral or symbol including a bead extending around at least one opening included in said numeral or symbol, said bead including said lower surface (30) which carries a said protuberance (40) for forming each said foot (4).

15. Method for fabricating an applique (1) for horology according to any of claims 1 to 14, **characterised in that** said rough piece (10) is made hollow, with said substantially flat lower surface (30) limited to a peripheral support edge, which carries a said protuberance (40) for forming each said foot (4), and/or which surrounds a pocket from which a said protuberance (40) protrudes to form at least one said foot (4).

16. Method for fabricating an applique (1) for horology according to any of claims 1 to 14, **characterised in that** said rough piece (10) is made solid, with said substantially flat lower surface (30) devoid of a pocket, and which carries a said protuberance (40) for forming each said foot (4).

17. Method for fabricating an applique (1) for horology according to any of claims 1 to 16, **characterised in that** a said applique (1) is made including a curved and/or bent lower surface (3) for resting on a dial or a structure of a timepiece, and **in that** the following steps are performed in succession, according to which first a rough piece (10) is made in the form of a straight workpiece with a substantially flat lower surface (30) from which projects a protuberance (40) for forming each said foot (4), on the opposite side from a top (20) included in said rough piece (10), then said rough piece (10) is deformed to form a blank (11) including a lower curve (31) which includes at least one portion of said curved lower surface (3), said blank (11) including an upper curve (21) resulting from the deformation of said top (20), then said blank (11) is mounted on at least one tool (50) including at least one support surface (51) complementary to said at least one portion of said curved lower surface (3) or to said lower curve (31), said tool (50) further including at least one recess (54) for housing each said protuberance (40) or each said foot (4) when said protuberance (40) is identical to said foot (4), said tool (50) further including gripping means and/or an adhesive for securing each said blank (11), and then said upper curve (21) is machined with at least one final diamond machining operation to form said upper surface (2).

18. Method for fabricating an applique (1) for horology according to claim 17, **characterised in that** said lower curve (31) is made forming the whole of said curved lower surface (3).

19. Method for fabricating an applique (1) for horology according to any of claims 1 to 18, **characterised in that** said rough piece (10) is made of assayed material.
